(19) **Europäisches Patentamt / European Patent Office / Office européen des brevets**

(11) **EP 4 462 902 A1**

(12) **EUROPEAN PATENT APPLICATION**

(43) Date of publication:
**13.11.2024 Bulletin 2024/46**

(21) Application number: **24167089.2**

(22) Date of filing: **27.03.2024**

(51) International Patent Classification (IPC):
**H04W 68/00** $^{(2009.01)}$    **H04W 68/02** $^{(2009.01)}$
**H04W 76/28** $^{(2018.01)}$    **H04W 92/18** $^{(2009.01)}$

(52) Cooperative Patent Classification (CPC):
**H04W 68/02; H04W 68/005; H04W 76/28;**
**H04W 92/18**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.05.2023 GB 202307088**

(71) Applicant: **Nokia Technologies Oy**
**02610 Espoo (FI)**

(72) Inventors:
• **YU, Ling**
  **02700 Kauniainen (FI)**
• **VAN PHAN, Vinh**
  **90100 Oulu (FI)**
• **SABOURI-SICHANI, Faranaz**
  **9220 Aalborg (DK)**
• **WOLFNER, György Tamás**
  **1163 Budapest (HU)**

(74) Representative: **Bryers Intellectual Property Ltd**
**Bristol & Bath Science Park**
**Dirac Crescent, Emerson's Green**
**Bristol, BS16 7FR (GB)**

(54) **PAGING MONITORING IN SIDELINK**

(57)    A method, comprising: receiving, by an apparatus, information on capability of another apparatus via sidelink connection from the another apparatus; identifying, by the apparatus, based at least on the received information, a mismatch between capability of the apparatus and capability of the another apparatus, wherein the capability of the apparatus and the capability of the another apparatus are related to paging message monitoring; and indicating the identified mismatch to a network node.

FIG. 4

**Description**

TECHNICAL FIELD

Various example embodiments relate generally to paging monitoring in sidelink.

BACKGROUND

In sidelink communication, a user equipment (UE), e.g. a remote user equipment, may communicate with a network via another user equipment, e.g. a relay user equipment. The relay UE may be requested by the remote UE to monitor paging messages of the remote UE.

BRIEF DESCRIPTION

According to some aspects, there is provided the subject matter of the independent claims. Some further aspects are defined in the dependent claims. The embodiments that do not fall under the scope of the claims are to be interpreted as examples useful for understanding the disclosure.
According to an aspect, there is provided a method, comprising: receiving, by an apparatus, information on capability of another apparatus via sidelink connection from the another apparatus; identifying, by an apparatus, based at least on the received information, a mismatch between capability of the apparatus and capability of the another apparatus, wherein the capability of the apparatus and the capability of the another apparatus are related to paging message monitoring; and indicating, by the apparatus, the identified mismatch to a network node. The method may be performed by the apparatus, e.g. a user equipment.
According to an embodiment, the received information on capability related to paging message monitoring indicates whether the another apparatus supports at least one of the following features: paging occasion determination in inactive state; or extended discontinuous reception, eDRX.
According to an embodiment, the apparatus is a remote user equipment and the another apparatus is a relay user equipment; and wherein the transmitting the indication of the identified mismatch comprises: transmitting information on updated capability of the apparatus to the network node, wherein the updated capability is related to paging message monitoring.
According to an embodiment, the method comprises: updating the capability of the apparatus based on the capability of the another apparatus.
According to an embodiment, the updating comprises: based on determining that the apparatus supports and the another apparatus does not support at least one of the following features: paging occasion determination in inactive state; or extended discontinuous reception, eDRX, updating the capability of the apparatus such that the apparatus does not support the same feature(s) as the another apparatus does not support.
According to an embodiment, the apparatus is or is comprised in a remote user equipment and the another apparatus is or is comprised in a relay user equipment; or the apparatus is or is comprised in a relay user equipment and the another apparatus is or is comprised in a remote user equipment.
According to an embodiment, the method comprises: transmitting, to the network node, information on the identified mismatch, the information on the identified mismatch indicating at least one feature causing the mismatch.
According to an aspect, there is provided an apparatus comprising means for performing at least the method of the aspect above and any of the embodiments thereof. The apparatus may be a user equipment.
According to an embodiment, the means comprises at least one processor; and at least one memory storing instructions that, when executed by the at least one processor, cause the performance of the apparatus. The apparatus may be a user equipment.
According to an aspect, there is provided a (non-transitory) computer readable medium comprising instructions that, when executed by an apparatus, cause the apparatus to perform at least the method of the aspect above and any of the embodiments thereof. The apparatus may be a user equipment.
According to an aspect, there is provided a computer program comprising instructions, which, when executed by an apparatus, cause the apparatus to perform at least the method of the aspect above and any of the embodiments thereof. The apparatus may be a user equipment.
According to an aspect, there is provided a method, comprising receiving, by a network node, an indication of a mismatch between capability of a user equipment and capability of another user equipment, wherein the capability of the user equipment and the capability of the another user equipment are related to paging message monitoring; and updating, by the network node, based on the received indication of the mismatch, paging transmission configuration for transmitting a paging message of the user equipment.
According to an embodiment, the updating paging transmission configuration comprises: calculating, based on the capability of the another user equipment, an updated paging occasion for transmission of the paging message of the user equipment.

According to an embodiment, the updated paging occasion is the same as calculated by the another user equipment based on the capability of the another user equipment.

According to an embodiment, the method comprises transmitting the paging message of the user equipment according to the updated paging transmission configuration.

According to an embodiment, the receiving the indication of the mismatch comprises receiving information on updated capability of the user equipment, wherein the updated capability is related to paging message monitoring.

According to an embodiment, the method comprises receiving information on the mismatch, the information on the mismatch comprising indication of at least one feature causing the mismatch.

According to an embodiment, the at least one feature comprises: paging occasion determination in inactive state; and/or extended discontinuous reception, eDRX.

According to an embodiment, the user equipment is or is comprised in a remote user equipment; and the another user equipment is or is comprised in a relay user equipment.

According to an aspect, there is provided an apparatus comprising means for performing at least the method of the aspect above and any of the embodiments thereof. The apparatus may be or may be comprised in a network node.

According to an embodiment, the means comprises at least one processor; and at least one memory storing instructions that, when executed by the at least one processor, cause the performance of the apparatus. The apparatus may be or may be comprised in a network node.

According to an aspect, there is provided a (non-transitory) computer readable medium comprising instructions that, when executed by an apparatus, cause the apparatus to perform at least the method of the aspect above and any of the embodiments thereof. The apparatus may be a network node.

According to an aspect, there is provided a computer program comprising instructions, which, when executed by an apparatus, cause the apparatus to perform at least the method of the aspect above and any of the embodiments thereof. The apparatus may be a network node.

LIST OF THE DRAWINGS

In the following, some example embodiments will be described with reference to the accompanying drawings.

Fig. 1 shows, by way of example, a network architecture of a communication system;
Fig. 2 shows, by way of example, a system for sidelink communication;
Fig. 3 shows, by way of example, a flowchart of a method;
Fig. 4 shows, by way of example, signalling between entities;
Fig. 5 shows, by way of example, a block diagram of an apparatus; and
Fig. 6 shows, by way of example, a flowchart of a method.

DETAILED DESCRIPTION

Embodiments described may be implemented in a radio system, such as one comprising at least one of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE). Term 'eLTE' here denotes the LTE evolution that connects to a 5G core. LTE is also known as evolved UMTS terrestrial radio access (EUTRA) or as evolved UMTS terrestrial radio access network (EUTRAN). A term "resource" may refer to radio resources, such as a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources

The embodiments are not, however, restricted to the systems/RATs given as an example but a person skilled in the art may apply the solution to other communication systems/networks provided with necessary properties. Some examples of a suitable communication networks include a 5G network and/or a 6G network. The 3GPP solution to 5G is referred to as New Radio (NR). 6G is envisaged to be a further development of 5G. NR has been envisaged to use multiple-input-multiple-output (MIMO) multi-antenna transmission techniques, more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G may require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

In radio communications, node operations may in be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of work between core network operations and base station operations may vary depending on implementation. Thus, 5G networks architecture may be based on a so-called CU-DU split. One gNB-CU controls several gNB-DUs. The term 'gNB' may correspond in 5G to the eNB in LTE. The gNBs (one or more) may communicate with one or more UEs. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

In an embodiment, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Some other possible technology advancements to be used are Software-Defined Networking (SDN), Big Data, and all-IP, to mention only a few non-limiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core network of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine software (SW) so that one common SW controls both radio access networks/technologies (RAN/RAT). This may allow then new ways to control radio resources of both RANs. Furthermore, it may be possible to have configurations where the full protocol stack is controlled by the same HW and handled by the same radio unit as the CU.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (IoT) systems which may enable a wide range of devices and services to be connected using cellular telecommunications bands. NB-IoT is a narrowband radio technology designed for the Internet of Things (IoT) and is one of technologies standardized by the 3rd Generation Partnership Project (3GPP). Other 3GPP IoT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

The embodiments may be also applicable to device-to-device (D2D), machine-to-machine, peer-to-peer (P2P) communications. The embodiments may be also applicable to vehicle-to-vehicle (V2V), vehicle-to-infrastructure (V2I), infrastructure-to-vehicle (I2V), or in general to V2X or X2V communications.

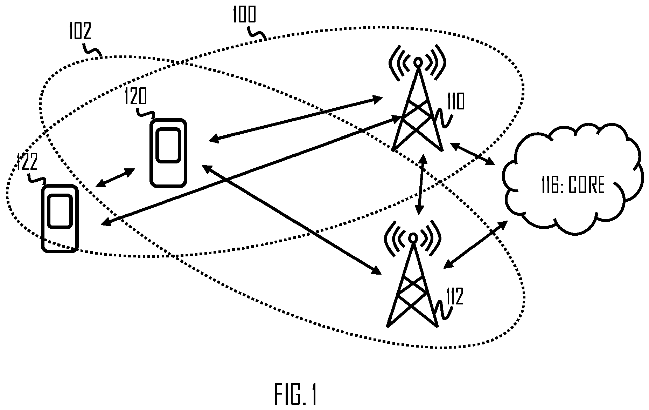

Fig. 1 shows, by way of example, a network architecture of communication system. The system may comprise a control node 110 providing one or more cells, such as cell 100, and a control node 112 providing one or more other cells, such as cell 102. Each cell may be, e.g., a macro cell, a micro cell, femto, or a pico cell, for example. In another point of view, the cell may define a coverage area or a service area of the corresponding access node. The control node 110, 112 may be an evolved Node B (eNB) as in the LTE and LTE-A, ng-eNB as in eLTE, gNB of 5G, or any other apparatus capable of controlling radio communication and managing radio resources within a cell. The control node 110, 112 may be called a base station, network node, or an access node.

The system may be a cellular communication system composed of a radio access network of access nodes, each controlling a respective cell or cells. The access node 110 may provide user equipment (UE) 120 (one or more UEs) with wireless access to other networks such as the Internet. The wireless access may comprise downlink (DL) communication from the control node to the UE 120 and uplink (UL) communication from the UE 120 to the control node.

Additionally, although not shown, one or more local area access nodes may be arranged such that a cell provided by the local area access node at least partially overlaps the cell of the access node 110 and/or 112. The local area access node may provide wireless access within a sub-cell. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node for the small cell may be likewise called a base station, network node, or an access node.

There may be a plurality of UEs 120, 122 in the system. Each of them may be served by the same or by different control nodes 110, 112. The UEs 120, 122 may communicate with each other via sidelink (SL), in case device-to device (D2D) communication interface is established between them.

The term "terminal device" or "UE" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the case of multiple access nodes in the communication network, the access nodes may be connected to each other with an interface. LTE specifications call such an interface as X2 interface. For IEEE 802.11 network (i.e. wireless local area network, WLAN, WiFi), a similar interface may be provided between access points. An interface between an LTE access point and a 5G access point, or between two 5G access points may be called Xn. Other communication methods between the access nodes may also be possible. The access nodes 110 and 112 may be further connected via another interface to a core network 116 of the cellular communication system. The LTE specifications specify the core network as an evolved packet core (EPC), and the core network may comprise a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC), and there the core network may comprise e.g. an access and mobility management function (AMF) and a user plane function/gateway (UPF), to mention only a few. The AMF may handle termination of non-access stratum (NAS) signalling, NAS ciphering & integrity protection, registration management, connection management, mobility management, access authentication and authorization, security context management. The UPF node may support packet routing & forwarding, packet inspection and QoS handling, for example.

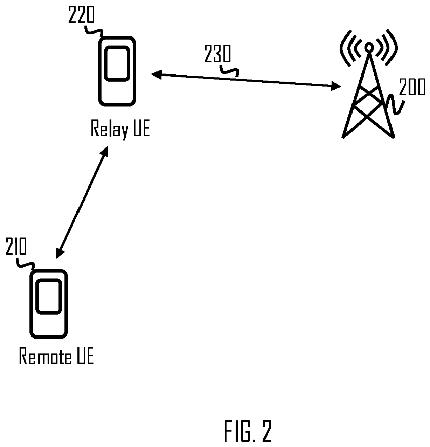

Fig. 2 shows, by way of example, a system for sidelink communication. Sidelink (SL) is a D2D communication technology. SL relay device or SL relay UE 220 may provide connectivity to the network node 200 for at least one remote UE 210. The remote UE may be, for example, out of coverage of a network node. The remote UE 210 may communicate with the network via the relay UE 220.

The relay UE may be, for example, a L2 UE-to-network (U2N) relay UE. The remote UE may be, for example, a L2 U2N remote UE.

Network node 200 may deliver paging messages to the remote UE 210 via the relay UE 220. The relay UE 220 may calculate paging occasions (POs) of the remote UE 210 and monitor the remote UE's paging in the calculated POs over the air interface or Uu interface 230.

The remote UE 210 in RRC idle mode or inactive mode may provide its identifier and remote UE specific discontinuous reception (DRX) cycle information to the connected relay UE 220. The identifier may be UE ID, e.g. 5G short-temporary mobile subscriber identity (5G-S-TMSI) or inactive radio network temporary identifier (I-RNTI).

DRX may be used in inactive state, e.g. in RRC idle state or RRC inactive state, to reduce power consumption such that the UE periodically wakes up from sleep mode to monitor for paging messages. DRX cycle comprises an ON period and an OFF period. The UE monitors paging messages during ON period and is in sleep mode during OFF period.

Extended DRX (eDRX) is a mechanism where DRX cycles are extended to allow the UE to remain in sleep mode or inactive state or power saving state for a longer period of time than legacy DRX cycle when eDRX is not supported. When configured with eDRX, the UE may listen for data indications or paging messages with longer interval and without having to establish a full network connection, thus saving power.

Upon receiving the paging message in the monitored POs, the relay UE 220 may check the UE ID, e.g. 5G-S-TMSI or I-RNTI, and send the relevant paging record to the remote UE 210.

The paging message is sent by the network node 200 and monitored by the relay UE 220 on PO, which is defined using the following parameters:

A paging frame (PF) is a radio frame comprising at least one PO or starting point of a PO.

System frame number (SFN) for the PF is determined by the following formula:

$$(SFN + PF\_offset) \bmod T = (T \operatorname{div} N)*(UE\_ID \bmod N), \qquad (1)$$

wherein T is DRX cycle of the UE, PF_offset is offset used for PF determination, N is the number of total paging frames in DRX cycle of the UE.

Index (i_s), indicating the index of the PO, is determined by the following formula:

$$i\_s = \operatorname{floor}(UE\_ID/N) \bmod Ns, \qquad (2)$$

wherein the UE_ID may be, for example, 5G-S-TMSI or I-RNTI; N is the number of total paging frames in DRX cycle of the UE, Ns is the number of POs for a PF.

For UE in RRC_INACTIVE, the UE may use the same or different i_s as for RRC_IDLE state depending on whether UE supports the feature of determination of paging occasion in inactive state (e.g. inactive-state-PO-determination) and the network (NW) configures the parameter ranPagingInIdlePO as "true" or not. If the UE supports the feature of inactive-state-PO-determination, and the UE is configured with parameter ranPagingIdlePO as "true", the UE may use the same i_s as in RRC Idle state when the UE is in RRC inactive state. Otherwise, the UE may determine the i_s based on the above formula (2).

Thus, the i_s value determination, or PO calculation, depends at least on the UE's capability, e.g. air interface capability or Uu interface capability or Uu capability, and NW configuration on support of determination of paging occasion in inactive sate, for example.

In addition, the PO determination or calculation for the UE also depends on UE's capability of supporting eDRX and the NW configuration of the parameter eDRX_AllowedIdle and eDRX_AllowedInactive. As defined in 3GPP TS 38.304, version 17.3.0 Release 17, section 7.1 "Discontinuous reception for paging", calculation of the PO depends on whether eDRX has been configured or not.

PO calculation for the UE may depend on capability of the UE to support the feature of inactive-state-PO-determination and/or eDRX.

The relay UE 220 and remote UE 210 may have different capabilities of supporting the feature of inactive-state-PO-determination and/or eDRX. For example, if the remote UE 210 supports a feature while the connected relay UE 220 doesn't support it, the relay UE 220 might not be able to calculate the correct POs for monitoring the remote UE's paging messages after the remote UE 210 has indicated its UE ID and DRX cycle to the relay UE 220 to request the relay UE 220 to monitor paging for the remote UE 210. This may cause the relay UE miss monitoring of the paging message of the remote UE. As another example, if the remote UE indicates its Uu capability of supporting the paging and/or eDRX related features while requesting the relay UE to monitor the paging for the remote UE, the relay UE may reject the request due to difference(s) in supported features and force the remote UE to reselect another relay UE.

Method is provided for indicating an identified paging capability mismatch of the relay UE and the remote UE to a network node, e.g. the serving network, e.g. gNB. Then, the network node is enabled to update the paging transmission in the paging occasion in the same way as the relay UE calculates using remote UE's ID and DRX cycle so that the relay UE will not miss the paging messages of the remote UE sent by the network node.

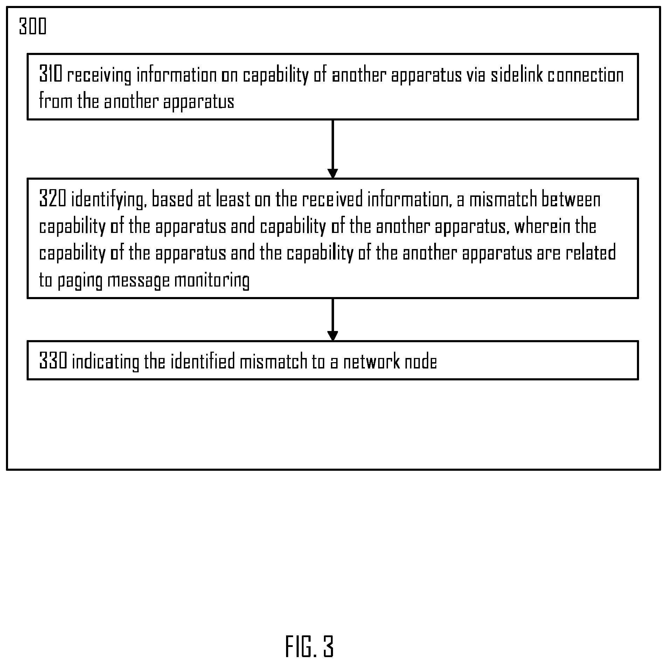

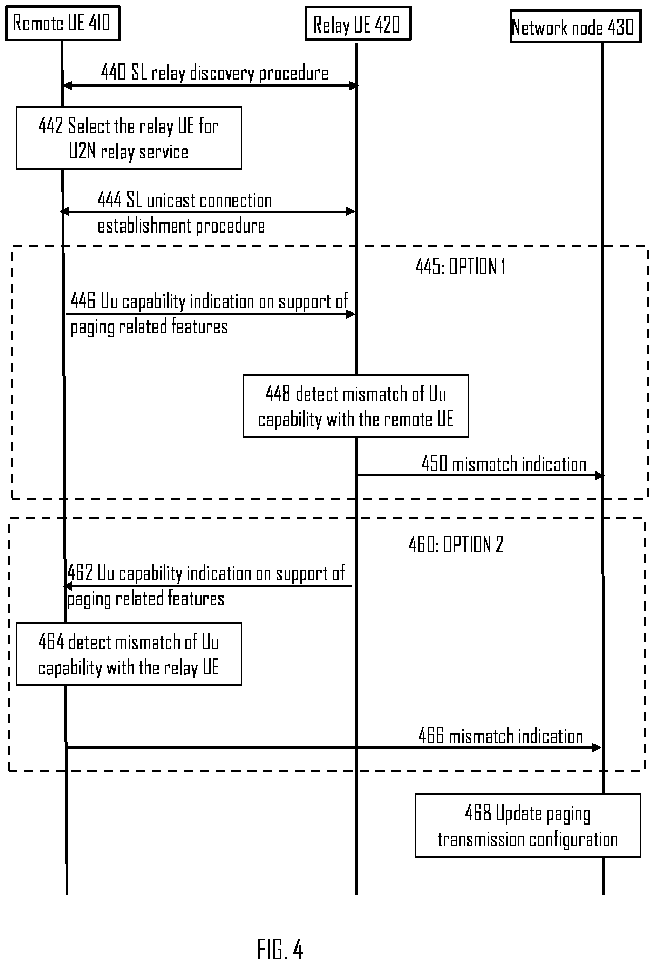

Fig. 3 shows, by way of example, a flowchart of a method 300. The method 300 may be performed by a user equipment, or by a control device configured to control the functioning thereof, when installed therein. The UE may be, for example, relay UE 220 of Fig. 2 or relay UE 420 of Fig. 4 or remote UE 210 of Fig. 2 or remote UE 420 of Fig. 4, which is configured to perform at least the method 300. The method 300 comprises receiving 310 information on capability of another apparatus via sidelink connection from the another apparatus. The method 300 comprises identifying 320, based at least on the received information, a mismatch between capability of the apparatus and capability of the another apparatus, wherein the capability of the apparatus and the capability of the another apparatus are related to paging message monitoring. The method 300 comprises indicating the identified mismatch to a network node.

The method as disclosed herein enables the network to update the paging transmission configuration, e.g. update calculation of a paging occasion for transmitting a paging message of the remote UE so that the relay UE will not miss the paging message of the remote UE sent by the network node.

Fig. 4 shows, by way of example, signalling between entities. A remote UE 410 and relay UE 420 may perform the sidelink (SL) relay discovery procedure 440 to allow the remote UE 410 to discover the relay UE 420 for the U2N relay services. For example, either SL discovery model A or model B may be configured to the relay UE 420 and the remote UE 410 for performing the SL relay discovery procedure. In discovery process according to model A, the relay UEs may broadcast discovery messages that inform nearby remote UEs about the presence of the relay UEs in proximity and their connectivity features. In discovery process according to model B, the remote UEs broadcast messages to relay UEs. The relay UEs may receive the messages and respond. The remote UE may then be allowed to obtain the relay UE's information from possibly a plurality of relay UEs, select a relay UE and establish a connection to it.

Upon discovery of the relevant relay UEs that can provide the targeted U2N relay services, the remote UE 410 may select 442 one of the candidate relay UEs for the targeted U2N relay service. The remote UE will then be triggered to initiate the SL unicast connection establishment procedure 444 with the selected relay UE 420.

The remote UE and the relay UE may exchange their capabilities on paging and/or eDRX support with each other. For example, the remote UE 410 may transmit 446 information on its capability on paging and/or eDRX support to the relay UE 420. For example, the remote UE may indicate at least a part of its Uu capabilities to the relay UE. Indication of the capability of paging and/or eDRX support may be performed, for example, during the SL discovery procedure or after the SL unicast connection has been established.

The remote UE 410 may transmit 446 information on its capability on paging and/or eDRX support to the relay UE 420. The relay UE 420 may transmit 462 information on its capability on paging and/or eDRX support to the remote UE 410. In at least some embodiments, the both UEs, the remote UE 410 and the relay UE 420 may transmit information on capability on paging and/or eDRX support to each other.

For example, a new SL radio resource control (RRC) message may be introduced for providing the information on capability on paging and/or eDRX support between the relay UE and the remote UE.

As another example, the existing SL RRC: Sidelink UE Capability Transfer procedure message (e.g. UECapabilityInformationSidelink message) or Sidelink UE Assistance Information procedure message (e.g. UEAssistanceInformationSidelink message) may be extended to include the information on capability on paging and/or eDRX support.

As another example, the existing remote UE information procedure message (e.g. RemoteUEInformationSidelink) may be extended to include the information on capability on paging and/eDRX support, when the remote UE sends the RemoteUEInformationSidelink message to provide its paging and/or eDRX related information to the relay UE.

As another example, the SL discovery message may be extended to include the information on capability on paging and/or eDRX support. The SL discovery message may be, for example, the SL relay discovery announcing message in model A or SL relay discovery solicitation message or SL relay discovery response message.

As another example, the existing SL RRC Uu Message Transfer in Sidelink procedure message (e.g. UuMessageTransferSidelink message) or NotificationMessage may be extended to include the information on capability on paging and/or eDRX support.

Information on capability related to paging message monitoring indicates whether the UE (remote UE or the relay UE) supports at least one of the following features 1 or 2: 1) determination of paging occasion in inactive state. This feature may be referred to as UE capability indicated by the information element (IE) of inactive-state-PO-determination, for example. 2) extended discontinuous reception, eDRX. Capability related to paging message monitoring may indicate whether the UE supports at least one of the features 1 or 2. The capability related to paging message monitoring may be referred to as capability on paging support and/or eDRX support.

As described above, remote UE and relay UE may support different features, or one device may support a feature or features that another device does not support. In other words, there may be a mismatch between capability on paging and/or eDRX support of the remote UE and capability on paging and/or eDRX support of the relay UE.

The apparatus identifying or detecting a mismatch between capability on paging and/or eDRX support of the remote UE and capability on paging and/or eDRX support of the relay UE may be either the remote UE 410 or the relay UE 420.

Let us consider that the relay UE 420 is the apparatus identifying or detecting 448 the mismatch, according to option 1 445 in the example of Fig. 4. The mismatch may be identified by comparing the capabilities of the remote UE 410 and the relay UE 420. For example, the mismatch may be identified by determining that the remote UE 410 supports a feature or features that the relay UE 420 does not support.

The relay UE 420 may transmit 450 an indication of the identified mismatch to a network node 430, e.g. gNB. The indication of the identified mismatch may be referred to as mismatch indication or Uu capability mismatch indication, for example.

The relay UE 420 may determine to transmit the indication of the identified mismatch to the network node 430 based on receiving a request from the remote UE 410 to monitor the paging message(s) for the remote UE. The remote UE 410 may have provided the request comprising paging information in a RemoteUEInformationSidelink message, for example. For example, the relay UE 420 may be responsible for indicating the mismatch to the network in case the remote UE 410 has selected the relay UE 420 for monitoring the paging for the remote UE 410 while the remote UE remains in inactive state, e.g. RRC idle state or RRC inactive state.

For example, a RRC message such as UEAssistenceInformation or SLUEInformation may be extended to include the mismatch indication to the network node.

For example, if the relay UE 420 is not in connected state (e.g. RRC_CONNECTED), the relay UE may be triggered, by the need of sending the mismatch indication to the network node, to establish its RRC connection to enter the RRC_CONNECTED state to send the mismatch indication to the network node 430.

As another example, if the relay UE is not in connected state (e.g. RRC_CONNECTED), the relay UE may be triggered to use the 2-step or 4-step random access channel (RACH) procedure to send the mismatch indication to the network node without entering the RRC_CONNECTED state. In this case, a new RRC message for the mismatch indication may be introduced and sent together with RACH preamble in 2-step RACH or send in message 3 of RACH procedure in 4-step RACH procedure.

As another example, if the relay UE is in inactive state (RRC_INACTIVE), the relay UE may utilize small data transmission (SDT) and add the mismatch indication as payload to RRC Resume Request (message 3 in 4-step RACH or message B in 2-step RACH).

The information on the identified mismatch, or mismatch indication, may comprise indication of at least one feature causing the mismatch. For example, the mismatch indication may indicate a feature or features that the remote UE 410 supports but the relay UE 420 does not support. For example, the mismatch indication may indicate all the features that the remote UE 410 supports but the relay UE 420 does not support.

For example, the existing RRC message UECapabilityInformation may be extended to indicate the at least one feature causing the mismatch in capabilities.

Let us consider that the remote UE 410 is the apparatus identifying or detecting 464 the mismatch, according to option 2 460 in the example of Fig. 4. The mismatch may be identified by comparing the capabilities of the remote UE 410 and the relay UE 420. For example, the mismatch may be identified by determining that the remote UE 410 supports a feature or features that the relay UE 420 does not support.

The remote UE 410 may determine to transmit the indication of the identified mismatch to the network node 430 based on having transmitted a request to the relay UE 420 to monitor the paging message(s) for the remote UE 410. The remote UE 410 may have provided the request comprising paging information in a RemoteUEInformationSidelink message, for example. For example, the remote UE 410 may be responsible for indicating the mismatch to the network in case the remote UE 410 has selected the relay UE 420 for establishing a connection with the network, e.g. for maintaining registration to the network or being reachable by the network.

The remote UE 410 may transmit the mismatch indication explicitly or implicitly to the network node 430.

For example, explicit mismatch indication may be indicated via RRC message, such as UEAssistenceInforma-tion or SLUEInformation, which may be extended to include the mismatch indication to the network node.

For example, implicit mismatch indication may be indicated via transmitting information on updated capability on paging and/or eDRX support of the remote UE to the network node. The remote UE 410 may update its capability on paging and/or eDRX support based on the capability on paging and/or eDRX support of the relay UE. For example, if the remote UE supports feature 1 (inactive-state-PO-determination) and/or feature 2 (eDRX) but the relay UE doesn't support the feature 1 and/or feature 2, the remote UE may update its own capability by indicating that it does not support the feature 1 and/or feature 2. The remote UE may determine that the relay UE does not support at least one of the feature 1 or feature 2. Based on determining that the relay UE does not support at least one of the feature 1 or feature 2, the remote UE may update its capability on paging and/or eDRX support such that the remote UE does not support the same feature(s) as the relay UE.

For example, the relay UE supports feature 1 but not feature 2. The remote UE supports both features 1 and 2. The remote UE identifies the mismatch between the capabilities on of the remote UE and the relay UE. The capabilities are related to paging message monitoring. Then, the remote UE may update its capabilities such that the remote UE supports feature 1 but not feature 2. The remote UE may transmit the updated capability to the network node. This may implicitly indicate to the network node that there has been a mismatch in the capabilities on paging support and/or eDRX support of the remote UE and the relay UE. For example, the remote UE may update its capabilities when the remote UE connects to another relay UE that has different capability with the currently connected relay UE or when the remote UE stops using U2N relay service and starts to monitor the paging by itself.

The network node 430, e.g. gNB, may receive an indication of a mismatch between capability on paging and/or eDRX support of a remote UE 410 and capability on paging and/or eDRX support of a relay UE 420. The network node 430 may receive the indication of mismatch either from the remote UE 410 or the relay UE 420.

Paging transmission configuration is indicative of parameters such as number of total paging frames per DRX cycle, the number of paging occasions for a paging frame, an offset for paging frame, a first downlink scheduling information monitoring occasion (e.g. physical downlink control channel PDCCH monitoring occasion) of each PO, paging search space, the default DRX cycle, etc. The network node and UE, e.g. relay UE, may use at least some of the information listed in paging transmission configuration in calculation of the POs.

The network node 430 may update 468, based on the received indication of the mismatch, the calculation of the paging occasion (PO) for transmitting a paging message of the remote UE. For example, the network node may calculate, based on the capability on paging support and/or eDRX support (capability related to monitoring of paging message(s)) of the relay UE, an updated paging occasion (PO) for transmission of the paging message of the remote UE. The updated paging occasion is the same as calculated by the relay UE. This way, the relay UE will not miss the paging message(s) of the remote UE.

For example, the network node receives information on the mismatch, the information on the mismatch comprising indication of at least one feature causing the mismatch. For example, the remote UE may support feature 1 and 2, but the relay does not support feature 1 but supports feature 2. When the network node is aware of this mismatch, the network may update the calculation of the PO for transmitting a paging message of the remote UE taking into account that the feature 1 is not supported. Without knowing the mismatch of the supported feature(s), the different DRX cycle may be used by network node and the relay UE to calculate the PO as explained in the following examples. The different DRX cycle length will lead to a different value of N in the formulas for calculating PF and PO (formulas 1 and 2 given above).

For example, if UE does not support eDRX feature, the PO is calculated using UE ID and the legacy DRX cycle. For example, let us consider that the relay UE can only use legacy DRX cycle (e.g. maximum 1.28s) to calculate PO. But if remote UE supports eDRX, the network node may calculate the remote UE's PO using eDRX cycle (e.g. longer than 1.28s). In this case, the calculated PO of remote UE in network side (as the network node knows the remote UE has eDRX capability) will not be the same as the PO calculated by the relay UE. Upon receiving the mismatch indication about relay UE not supporting eDRX, the network node will use the legacy DRX cycle to calculate remote UE's PO so that the relay UE can get the same PO calculation result as the network node.

As another example, let us consider that the remote UE supports the inactive-state-PO-determination feature and the relay UE does not. If the network has also indicated "true" in the IE of ranPagingInIdlePO in SIB1, the network will use the DRX cycle configured by the core network as the UE is in idle state to calculate PO for the remote UE. But if relay UE doesn't support the feature, the relay UE will use the DRX cycle configured by the RAN for inactive state UE (that is the remote UE's RRC state). If the DRX cycle configured by the core network and DRX cycle configured by RAN is not the same, the PO calculated by the network node for the remote UE's paging message transmission and the PO calculated by the relay UE for monitoring the remote UE's paging message is not the same, which will cause the relay UE missing the remote UE's paging message that is transmitted in PO calculated by the network node.

The network node may transmit the paging message of the remote UE according to the updated paging occasion. Thus, the relay UE is able to monitor the remote UE's paging messages, as requested by the remote UE.

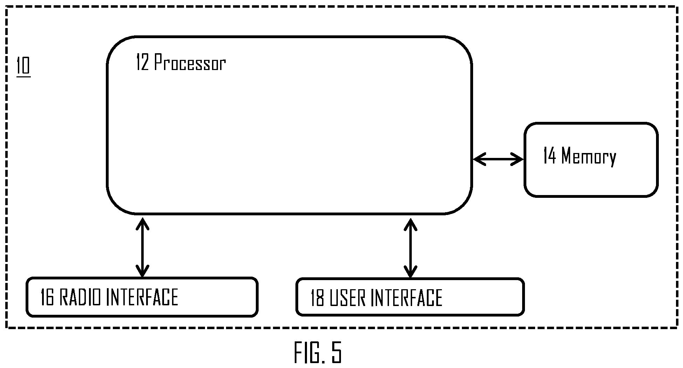

Fig. 5 shows, by way of example, a block diagram of an apparatus 10. The apparatus 10 may comprise, for example, control circuitry, such as at least one processor 12, and at least one memory 14 storing instructions that, when executed by the at least one processor, cause the apparatus at least to carry out any one of the above-described processes. In an example, the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

For example, the apparatus 10 is or is comprised in a user equipment. The apparatus 10 or device may comprise, for example, a mobile communication device such as a user equipment 410 or 420 of Fig. 4. The apparatus may be caused or configured to execute some of the functionalities of the above described processes, such as the steps of a method of Fig. 3.

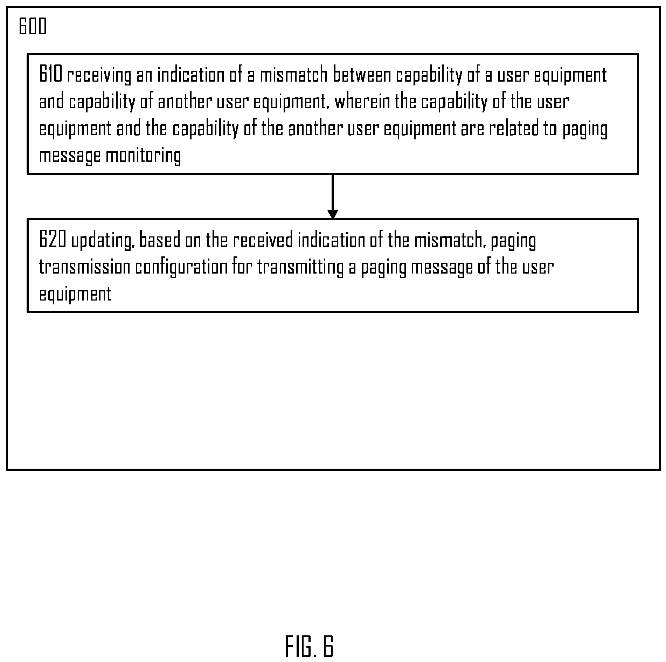

For example, the apparatus 10 may be or be comprised in a network node, such as in a network node 430, e.g. gNB. The apparatus may be caused or configured to execute some of the functionalities of the processes disclosed herein, such as the steps of Fig. 6.

The apparatus may further comprise a radio interface 16 comprising hardware and/or software for realizing communication connectivity according to one or more communication protocols. The radio interface 16 may provide the apparatus with communication capabilities to access the radio access network, for example. The radio interface may comprise a receiver configured to receive information in accordance with at least one cellular or non-cellular standard. The radio interface may comprise a transmitter configured to transmit information in accordance with at least one cellular or non-cellular standard. The receiver may comprise more than one receiver. The transmitter may comprise more than one transmitter. The radio interface may comprise a transceiver configured to receive and transmit information in accordance with at least one cellular or non-cellular standard.

The apparatus may comprise a user interface 18 comprising, for example, at least one of a keypad, a microphone, a touch display, a display, a speaker, etc. The user interface may be used to control the apparatus by the user.

A term non-transitory, as used herein, is a limitation of the medium itself (i.e. tangible, not a signal) as opposed to a limitation on data storage persistency (e.g. random access memory, RAM, vs. read only memory, ROM).

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Fig. 6 shows, by way of example, a flowchart of a method 600. The method 600 may be performed by a network node, or by a control device configured to control the functioning thereof, when installed therein. The network node may be, for example, network node 200 of Fig. 2 or network node 430 of Fig. 4, which is configured to perform at least the method 600. The method 600 comprises receiving 610 an indication of a mismatch between capability of a user equipment and capability of another user equipment, wherein the capability of the user equipment and the capability of the another user equipment are related to paging message monitoring. The method 600 comprises updating 620, based on the received indication of the mismatch, paging transmission configuration for transmitting a paging message of the user equipment.

The method as disclosed herein enables the network node to update the paging transmission configuration for transmitting a paging message of the remote UE so that the relay UE is able to detect the paging message of the remote UE. For example, the network node may update or calculate or recalculate, based on capability of the relay UE, the paging occasion for transmission of the paging message of the remote UE.

**Claims**

1. An apparatus, comprising:

   at least one processor; and
   at least one memory storing instructions that, when executed by the at least one processor, cause the apparatus at least to perform:

      receiving information on capability of another apparatus via sidelink connection from the another apparatus;
      identifying, based at least on the received information, a mismatch between capability of the apparatus and capability of the another apparatus, wherein the capability of the apparatus and the capability of the another apparatus are related to paging message monitoring; and
      indicating the identified mismatch to a network node, wherein the received information on capability related to paging message monitoring indicates whether the another apparatus supports paging occasion determination in inactive state.

2. The apparatus of claim 1, wherein the apparatus is a remote user equipment and the another apparatus is a relay user equipment; and wherein the transmitting the indication of the identified mismatch comprises: transmitting information on updated capability of the apparatus to the network node, wherein the updated capability is related to paging message monitoring.

3. The apparatus of claim 2, caused to perform:
   updating the capability of the apparatus based on the capability of the another apparatus.

4. The apparatus of claim 3, wherein the updating comprises: based on determining that the apparatus supports and the another apparatus does not support at least one of the following features:

      paging occasion determination in inactive state; or
      extended discontinuous reception, eDRX,
      updating the capability of the apparatus such that the apparatus does not support the same feature(s) as the another apparatus does not support.

5. The apparatus of claim 1, wherein

      - the apparatus is or is comprised in a remote user equipment and the another apparatus is or is comprised in a relay user equipment; or
      - the apparatus is or is comprised in a relay user equipment and the another apparatus is or is comprised in a remote user equipment.

6. The apparatus of any preceding claim, caused to perform:
   transmitting, to the network node, information on the identified mismatch, the information on the identified mismatch indicating at least one feature causing the mismatch.

7. An apparatus, comprising:

   at least one processor; and

at least one memory storing instructions that, when executed by the at least one processor, cause the apparatus at least to perform:

receiving an indication of a mismatch between capability of a user equipment and capability of another user equipment, wherein the capability of the user equipment and the capability of the another user equipment are related to paging message monitoring;

updating, based on the received indication of the mismatch, paging transmission configuration for transmitting a paging message of the user equipment, wherein the receiving the indication of the mismatch comprises receiving information on updated capability of the user equipment, wherein the updated capability is related to paging message monitoring, and wherein the information on the mismatch comprises an indication of a feature causing the mismatch, wherein the feature comprises paging occasion determination in inactive state.

8. The apparatus of claim 7, wherein the updating paging transmission configuration comprises:
calculating, based on the capability of the another user equipment, an updated paging occasion for transmission of the paging message of the user equipment.

9. The apparatus of claim 8,
wherein the updated paging occasion is the same as calculated by the another user equipment based on the capability of the another user equipment.

10. The apparatus of any of the claims 8 to 9, caused to perform: transmitting the paging message of the user equipment according to the updated paging transmission configuration.

11. The apparatus of any of the claims 8 to 10, wherein the user equipment is or is comprised in a remote user equipment; and the another user equipment is or is comprised in a relay user equipment.

12. A method, comprising:

receiving, by an apparatus, information on capability of another apparatus via sidelink connection from the another apparatus;

identifying, by the apparatus, based at least on the received information, a mismatch between capability of the apparatus and capability of the another apparatus, wherein the capability of the apparatus and the capability of the another apparatus are related to paging message monitoring;

indicating, by the apparatus, the identified mismatch to a network node, wherein the received information on capability related to paging message monitoring indicates whether the another apparatus supports paging occasion determination in inactive state.

13. The method of claim 12, comprising:
transmitting, to the network node, information on the identified mismatch, the information on the identified mismatch indicating at least one feature causing the mismatch.

14. A method, comprising:

receiving, by a network node, an indication of a mismatch between capability of a user equipment and capability of another user equipment, wherein the capability of the user equipment and the capability of the another user equipment are related to paging message monitoring;

updating, by the network node, based on the received indication of the mismatch, paging transmission configuration for transmitting a paging message of the user equipment;

receiving information on the mismatch, the information on the mismatch comprising indication of a feature causing the mismatch, wherein the feature comprises paging occasion determination in inactive state.

15. The method of claim 14,
wherein the updating paging transmission configuration comprises: calculating, based on the capability of the another user equipment, an updated paging occasion for transmission of the paging message of the user equipment.

FIG. 1

FIG. 2

300

310 receiving information on capability of another apparatus via sidelink connection from the another apparatus

320 identifying, based at least on the received information, a mismatch between capability of the apparatus and capability of the another apparatus, wherein the capability of the apparatus and the capability of the another apparatus are related to paging message monitoring

330 indicating the identified mismatch to a network node

FIG. 3

# EP 4 462 902 A1

FIG. 4

16

FIG. 5

EP 4 462 902 A1

**600**

610 receiving an indication of a mismatch between capability of a user equipment and capability of another user equipment, wherein the capability of the user equipment and the capability of the another user equipment are related to paging message monitoring

620 updating, based on the received indication of the mismatch, paging transmission configuration for transmitting a paging message of the user equipment

FIG. 6

18

Europäisches
Patentamt

European
Patent Office

Office européen
des brevets

# EUROPEAN SEARCH REPORT

Application Number

EP 24 16 7089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAKOB LINDBJERG BUTHLER ET AL: "Considerations on paging for sidelink relay", 3GPP DRAFT; R2-2305592; TYPE DISCUSSION; NR_SL_RELAY_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Incheon, KR; 20230522 - 20230526 11 May 2023 (2023-05-11), XP052314814, Retrieved from the Internet: URL:https://www.3gpp.org/ftp/TSG_RAN/WG2_RL2/TSGR2_122/Docs/R2-2305592.zip R2-2305592 Considerations on paging for sidelink relay.docx [retrieved on 2023-05-11] * the whole document * | 1-15 | INV.<br>H04W68/00<br>H04W68/02<br><br>ADD.<br>H04W76/28<br>H04W92/18 |

-----

-/--

TECHNICAL FIELDS
SEARCHED    (IPC)

H04W

The present search report has been drawn up for all claims

| Place of search | Date of completion of the search | Examiner |
|---|---|---|
| Berlin | 27 August 2024 | Tous Fajardo, Juan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 1 of 2

**EUROPEAN SEARCH REPORT**

Application Number

EP 24 16 7089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OPPO: "Summary of [AT121bis-e][416][Relay] Paging monitoring by L2 relay", 3GPP DRAFT; R2-2304291, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. E-meeting; 20230401 2 May 2023 (2023-05-02), XP052370179, Retrieved from the Internet: URL:https://ftp.3gpp.org/tsg_ran/WG2_RL2/TSGR2_121bis-e/Docs/R2-2304291.zip R2-2304291 - Summary of [AT121bis-e][416] Relay Paging monitoring by L2 relay (OPPO)_final.doc [retrieved on 2023-05-02] * paragraph [03.1] - paragraph [03.2] * ----- | 1-15 | |

TECHNICAL FIELDS
SEARCHED      (IPC)

The present search report has been drawn up for all claims

| Place of search | Date of completion of the search | Examiner |
|---|---|---|
| Berlin | 27 August 2024 | Tous Fajardo, Juan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)